(19) Europäisches Patentamt
European Patent Office
Office européen des brevets

(11) EP 3 623 881 A1

(12) EUROPÄISCHE PATENTANMELDUNG

(43) Veröffentlichungstag:
18.03.2020 Patentblatt 2020/12

(51) Int Cl.:
G05B 17/02 (2006.01)    G05B 13/04 (2006.01)

(21) Anmeldenummer: 18194723.5

(22) Anmeldetag: 17.09.2018

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(72) Erfinder:
• Depeweg, Stefan
  81373 München (DE)
• Geipel, Markus Michael
  80799 München (DE)
• Kaiser, Markus
  80539 München (DE)
• Udluft, Steffen
  82223 Eichenau (DE)

(71) Anmelder: Siemens Aktiengesellschaft
80333 München (DE)

(54) COMPUTERIMPLEMENTIERTES VERFAHREN ZUM ABSCHÄTZEN EINES TECHNISCHEN VERHALTENS EINER VORRICHTUNG

(57) Die Erfindung betrifft ein computerimplementiertes Verfahren zum Abschätzen eines technischen Verhaltens einer Vorrichtung, insbesondere einer Vorrichtung zum Erzeugen von Energie, wobei ein Quellmodell einer Quellvorrichtung verwendet wird, wobei das Quellmodell wenigstens zwei Funktionen aufweist, wobei die zwei Funktionen ein technisches Verhalten der Quellvorrichtung mit einer statistischen Ungenauigkeit beschreiben, wobei die Funktionen des Quellmodells mit einem gemessenen technischen Verhalten der Vorrichtung verglichen werden, wobei für die Funktionen aufgrund des Vergleiches Bewertungsfaktoren ermittelt werden, wobei die Funktionen mit den Bewertungsfaktoren bewertet werden, und wobei mithilfe der bewerteten Funktionen des Quellmodells wenigstens ein Wert des technischen Verhaltens der Vorrichtung abgeschätzt wird.

FIG 1

**Beschreibung**

Die Erfindung betrifft ein computerimplementiertes Verfahren zum Abschätzen eines technischen Verhaltens einer Vorrichtung, eine Steuereinheit, die ausgebildet ist, das Verfahren auszuführen, und ein Computerprogrammprodukt.

Aus EP 2 112 569 B1 ist ein Verfahren zum rechnergestützten Lernen einer Steuerung und/oder Regelung eines technischen Systems bekannt. Dabei wird basierend auf im Betrieb des technischen Systems erfassten Trainingsdaten eine Qualitätsfunktion und eine Aktionsauswahlregel gelernt, wobei die Qualitätsfunktion einen optimalen Betrieb des technischen Systems modelliert und die Aktionsauswahlregel im Betrieb des technischen Systems für einen jeweiligen Zustand des technischen Systems die bevorzugt auszuführende Aktion angibt. Während des Lernens der Qualitätsfunktion und der Aktionsauswahlregel wird ein Maß für die statistische Unsicherheit der Qualitätsfunktion mittels einer Gaußschen Fehlerfortpflanzung ermittelt. In Abhängigkeit von dem Maß für die statistische Unsicherheit und einem Sicherheitsparameter, der einer statistischen Mindestanforderung an die Qualitätsfunktion entspricht, wird eine modifizierte Qualitätsfunktion bestimmt.

Die Aufgabe der Erfindung besteht darin, ein verbessertes computerimplementiertes Verfahren zum Abschätzen eines technischen Verhaltens einer Vorrichtung bereitzustellen.

Die Aufgabe der Erfindung wird durch die unabhängigen Patentansprüche gelöst.

Ein Vorteil des beschriebenen Verfahrens besteht darin, dass das technische Verhalten der Vorrichtung auch mit weniger Daten über die Vorrichtung selbst abgeschätzt werden kann. Dazu wird ein Quellmodell einer Quellvorrichtung verwendet. Das Quellmodell beschreibt ein technisches Verhalten der Quellvorrichtung. Das Quellmodell weist wenigstens zwei Funktionen auf. Die zwei Funktionen beschreiben ein technisches Verhalten der Quellvorrichtung mit einer statistischen Ungenauigkeit. Die Funktionen des Quellmodells werden mit einem gemessenen technischen Verhalten der Vorrichtung verglichen. Bei dem Vergleich kann das Verhalten der Vorrichtung für eine vorgegebene Ansteuerung gemessen und mit dem Verhalten des Quellmodells bei der gleichen Ansteuerung verglichen werden. Für jede Funktion können mehrere Vergleiche für verschiedene Ansteuerungen verglichen werden. Aufgrund der Vergleiche kann ein Bewertungsfaktor ermittelt werden, der angibt, wie gut das Quellmodell mit den zwei Funktionen das tatsächliche technische Verhalten der Vorrichtung abbildet.

Anschließend wird mithilfe der mit den Bewertungsfaktoren bewerteten Funktionen wenigstens ein Wert des technischen Verhaltens der Vorrichtung abgeschätzt. Die Abschätzung des Wertes des technischen Verhaltens kann beispielsweise für einen Bereich erfolgen, in dem bisher keine Messung des technischen Verhaltens der Vorrichtung durchgeführt wurde, oder für einen technischen Bereich, in dem die Vorrichtung noch nicht betrieben wurde. Somit kann ohne Messwerte des tatsächlichen technischen Verhaltens der Vorrichtung das technische Verhalten der Vorrichtung mithilfe der mit den Bewertungsfaktoren bewerteten Funktionen des Quellmodelles abgeschätzt werden.

Die Funktionen des Quellmodelles können mit verschiedenen Verfahren ermittelt werden. Beispielsweise können die Funktionen des Quellmodelles mithilfe eines Bayes Netzes ermittelt werden. Das Bayes Netz wird beispielsweise anhand von Messdaten der Quellvorrichtung trainiert. Die Quellvorrichtung kann eine reale Vorrichtung sein, die wenigstens in einer technischen Funktion, insbesondere in mehreren oder allen technischen Funktionen im Wesentlichen dem technischen Verhalten der Vorrichtung entspricht. Beispielsweise kann der Fall vorliegen, dass zu der Quellvorrichtung bereits eine Vielzahl von Messdaten vorliegt, mit der das Bayes Netz trainiert werden kann. Dies ist insbesondere dann von Vorteil, wenn zu der Vorrichtung selbst weniger Messdaten oder keine Messdaten für das technische Verhalten der Vorrichtung vorliegen.

In einer weiteren Ausführungsform können die Funktionen des Quellmodells mithilfe eines Gaußschen Prozesses anhand von Messdaten der Quellvorrichtung ermittelt werden. Auch mit diesem Verfahren werden wenigstens zwei Funktionen ermittelt, die mit einer statistischen Ungenauigkeit das technische Verhalten der Quellvorrichtung beschreiben.

Mithilfe der Bewertungsfaktoren wird eine Bewertung der statistischen Ungenauigkeit der Funktionen ermöglicht.

In einer weiteren Ausführungsform wird nicht nur ein Quellmodell verwendet, sondern es werden Funktionen eines zweiten Quellmodelles verwendet. Das zweite Quellmodell beschreibt eine zweite Quellvorrichtung, die beispielsweise als reale Vorrichtung existiert und für die ein zweites Quellmodell erstellt wurde, das wenigstens zwei Funktionen aufweist. Auch diese zwei Funktionen beschreiben das technische Verhalten der zweiten Quellvorrichtung mit einer statistischen Ungenauigkeit. Die wenigstens zwei Funktionen des zweiten Quellmodells werden mit dem gemessenen technischen Verhalten der Vorrichtung verglichen. Für jede Funktion des zweiten Quellmodells wird aus dem Vergleich ein Bewertungsfaktor ermittelt. Die zwei Funktionen des zweiten Quellmodells werden mit den zwei Bewertungsfaktoren bewertet. Mithilfe der bewerteten Funktionen des zweiten Quellmodells und mithilfe der bewerteten Funktionen des ersten Quellmodells wird wenigstens ein Wert des technischen Verhaltens der Vorrichtung abgeschätzt.

Durch die Verwendung des zweiten Quellmodells der zweiten Quellvorrichtung stehen weitere Daten zur Verfügung, die eine Beschreibung des technischen Verhaltens der Vorrichtung verbessern. Beispielsweise können die Daten der zweiten Quellvorrichtung, die für die Erstellung der zwei Funktionen des zweiten Quellmodells verwendet wurden, umfangreicher sein oder andere technische Bereiche abdecken als die Funktionen des Quellmodells der ersten Quellvorrichtung.

Zudem kann abhängig von der gewählten Ausführungsform die zweite Quellvorrichtung sich in einzelnen technischen Funktionen gegenüber der ersten Quellvorrichtung unterscheiden. Beispielsweise kann abhängig von der Ausführungsform der Vorrichtung und der Quellvorrichtungen das technische Verhalten der Vorrichtung zwischen dem technischen Verhalten der Quellvorrichtung und dem technischen Verhalten der zweiten Quellvorrichtung liegen. Somit kann durch die Berücksichtigung der Funktionen der zwei Quellmodelle das technische Verhalten der Vorrichtung besser abgeschätzt werden als durch die Berücksichtigung nur eines Quellmodells.

Abhängig von der gewählten Ausführungsform wird mithilfe der bewerteten Funktionen des wenigstens einen Quellmodells ein technisches Verhalten der Vorrichtung für eine vorgegebene Anzahl von aufeinander folgenden Steuerwerten, mit denen die Vorrichtung gesteuert wird, abgeschätzt. Zudem kann abhängig von der gewählten Ausführungsform nicht nur ein einzelnes technisches Verhalten oder ein Wert eines technischen Verhaltens der Vorrichtung mithilfe der bewerteten Funktionen des wenigstens einen Quellmodelles abgeschätzt werden, sondern es kann ein Modell für das technische Verhalten der Vorrichtung ermittelt werden. Somit können nicht nur einzelne Teilbereiche des technischen Verhaltens, sondern auch ein komplexes Verhalten der Vorrichtung mithilfe des Modells abgeschätzt oder überprüft werden.

In einer weiteren Ausführungsform wird mithilfe der bewerteten Funktionen des wenigstens einen Quellmodells und mithilfe eines Lernverfahrens ein Steuerverfahren für ein gewünschtes technisches Verhalten der Vorrichtung ermittelt. Somit kann beispielsweise ein optimiertes Verhalten der Vorrichtung wenigstens unter Berücksichtigung der bewerteten Funktionen des wenigstens einen Quellmodells ermittelt werden. Dies kann beispielsweise dann von Vorteil sein, wenn für die Vorrichtung selbst zu wenig oder nicht ausreichend viele Messwerte des technischen Verhaltens der Vorrichtung vorliegen, um mithilfe eines Lernverfahrens auf Basis einer Simulation das technische Verhalten der Vorrichtung zu ermitteln.

Als Lernverfahren kann beispielsweise ein verstärkendes Lernverfahren eingesetzt werden, mit dem mit weniger Iterationsschritten und/oder ein genaueres Steuerverfahren für ein gewünschtes technisches Verhalten der Vorrichtung ermittelt werden kann.

In einer Ausführungsform wird die statistische Unsicherheit der Funktionen des wenigstens einen Quellmodells beim Lernverfahren berücksichtigt. Insbesondere kann die statistische Unsicherheit als Steuerwert berücksichtigt werden, um beispielsweise die statistische Unsicherheit auf einen vorgegebenen Wertebereich zu optimieren, um das gewünschte Steuerverfahren zu ermitteln.

Die Unsicherheit der Funktionen kann beispielsweise dabei so berücksichtigt werden, dass eine Verringerung der Unsicherheit die Belohnungsfunktion des Lernverfahrens erhöht. Dies bedeutet, dass alle Steuerwerte (Aktionen) belohnt werden, die kurz- oder langfristig zu einer Verringerung der Unsicherheit führen. Dies ist dann von Vorteil, da angenommen wird, dass die Unsicherheit eine gewisse Übereinstimmung mit der wahren Unsicherheit aufweist und somit zu einer gesteigerten Robustheit des Steuerverfahrens führt, wenn die Unsicherheit abnimmt.

Somit lässt sich bei gleicher Datenmenge eine Steuerung beziehungsweise Regelung erlernen, deren Wahrscheinlichkeit für einen Misserfolg geringer ist. Man erhält also einen verbesserten Erwartungswert der Leistungsfähigkeit des Steuerverfahrens. Somit kann beispielsweise bei gleicher Datenmenge eine Steuerung oder Regelung erlernt werden, die mit größerer Wahrscheinlichkeit die gewünschte Optimierung des technischen Verhaltens der Vorrichtung erreicht.

In einer weiteren Ausführungsform kann die Unsicherheit beim Lernverfahren so berücksichtigt werden, dass eine Erhöhung der Unsicherheit die Belohnungsfunktion des Lernverfahrens erhöht. Somit werden alle Steuerungen (Aktionen) der Vorrichtung, die kurz- oder langfristig zu einer Erhöhung der Unsicherheit der Funktionen führen, belohnt. Dieses Verfahren kann dann eingesetzt werden, wenn eine Information über das technische Verhalten der Vorrichtung in Bereichen ermittelt werden soll, in denen die Abschätzung des technischen Verhaltens der Vorrichtung eine große Unsicherheit aufweist. Somit lässt sich bei gleicher Datenmenge eine Steuerung oder Regelung erlernen, mit der möglichst effektiv Schätzwerte für das technische Verhalten erzeugt werden, die das Lernen begünstigen.

In einer Ausführungsform weisen die statistischen Unsicherheiten der Funktionen eines Quellmodells eine Gaußverteilung auf. Die Gaußverteilung wird durch einen vorgegebenen Mittelwert und durch eine vorgegebene Standardabweichung festgelegt.

In einer Ausführungsform ist das technische Verhalten der Vorrichtung durch Zustände charakterisiert, die die Vorrichtung im Betrieb einnehmen kann. Die Vorrichtung wird durch einen Steuerwert (Aktion), der während des Betriebes zum Steuern der Vorrichtung vorgegeben wird, von einem Zustand in einen folgenden Zustand übergeführt. Ein Zustand der Vorrichtung weist wenigstens ein Beobachtungsdatum auf. Eine Funktion eines Quellmodelles weist wenigstens ein Quellbeobachtungsdatum für den gleichen Steuerwert auf, der auf die Quellvorrichtung einwirkt. Ein erster Bewertungsfaktor für eine Funktion des Quellmodelles wird beispielsweise dadurch ermittelt, dass mehrere ermittelte Quellbeobachtungsdaten der Funktionen mit gemessenen Beobachtungsdaten der Vorrichtung verglichen werden. Aus dem Vergleich wird für jedes Quellbeobachtungdatum der Funktion ein Bewertungsfaktor ermittelt. Der Bewertungsfaktor für die Funktion wird durch eine Mittelung der Bewertungsfaktoren ermittelt. Somit kann die Funktion abhängig von dem Vergleich der ermittelten Quellbeobachtungsdaten mit den gemessenen Beobachtungsdaten abgeschätzt werden.

In einer Ausführungsform weist die Quellfunktion wenigstens vorgegebene ähnliche Eigenschaften im Aufbau und/oder in einer technischen Funktionsweise wie die Vorrichtung auf. Dadurch wird ein relativ ähnliches technisches Verhalten der Quellvorrichtung und der Vorrichtung erreicht. Somit weichen die Funktionen des Quellmodells wenig von der Funktion der Vorrichtung ab.

In einer Ausführungsform wird die Vorrichtung mit den ermittelten Steuerwerten gesteuert. Zudem kann das technische Verhalten der Vorrichtung mit einem Modell abgeschätzt werden.

In einer weiteren Ausführungsform wird das Modell für das technische Verhalten der Vorrichtung als neuronales Netz simuliert. Anhand von Daten der Funktionen des wenigstens einen Quellmodells und anhand von gemessenen Beobachtungsdaten der technischen Funktion der Vorrichtung wird das neuronale Netz trainiert. Da die Funktionen des Quellmodells berücksichtigt werden, kann mit weniger gemessenen Beobachtungsdaten der Vorrichtung eine gute Abschätzung des technischen Verhaltens der Vorrichtung ermittelt werden.

In einer weiteren Ausführungsform weist der Bewertungsfaktor eine Funktion auf. Die Funktion kann von einer Abweichung des Quellbeobachtungsdatums des Quellmodells von einem gemessenen Beobachtungsdatum der Vorrichtung abhängen. Insbesondere kann die Funktion des Bewertungsfaktors den Wert 1 aufweisen, wenn die Abweichung des Quellbeobachtungsdatums von dem gemessenen Beobachtungsdatum kleiner ist als ein vorgegebener Schwellwert. Zudem kann die Funktion des Bewertungsfaktors den Wert 0 aufweisen, wenn die Abweichung des Quellbeobachtungsdatums von dem gemessenen Beobachtungsdatum größer ist als der Schwellwert. In einer weiteren Ausführungsform kann die Bewertungsfunktion exponentiell von der Abweichung des Quellbeobachtungsdatums von dem gemessenen Beobachtungsdatum abhängen. Mithilfe der Funktionen kann der Bewertungsfaktor präziser eingestellt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

FIG 1    eine schematische Darstellung eines Programmablaufes zur Durchführung des Verfahrens zur Abschätzung des technischen Verhaltens der Vorrichtung,

FIG 2    eine schematische Darstellung eines Bayes Netzes mit Wichtungsfaktoren, die eine Gaußsche Verteilung aufweisen, und

FIG 3    eine schematische Darstellung einer Steuereinheit, das ein Lernverfahren ausführt, mit dem ein Modell für die Beschreibung des technischen Verhaltens der Vorrichtung erlernt werden kann,

zeigt.

Nachfolgend wird die Vorrichtung am Beispiel eines technischen Systems erläutert, welches durch einen Zustandsraum S und einen Aktionsraum A charakterisiert ist. Der Zustandsraum stellt eine Vielzahl von diskreten bzw. kontinuierlichen Zuständen in der Form von Parametern des technischen Systems dar, welche das technische System während seines Betriebs charakterisieren. Bei einer Gasturbine können diese Parameter beispielsweise die Menge an zugeführtem Treibstoff oder das Brummen der Turbine sein. Der Aktionsraum bezeichnet die möglichen, am technischen System durchführbaren Aktionen, d.h. Vorgabe von Steuerwerten, wobei mit den Aktionen die Zustände des technischen Systems verändert werden können. Eine Aktion kann die Veränderung einer Stellgröße des technischen Systems sein, beispielsweise eine Veränderung der Position von Leitschaufeln einer Gasturbine, eine Veränderung der Treibstoffzufuhr und dergleichen.

Die Dynamik des technischen Systems wird in der hier beschriebenen Ausführungsform als Markov-Entscheidungs-Prozess durch eine Transitions-Wahrscheinlichkeitsverteilung $PT:S \times A \times S \to [0,1]$ charakterisiert, welche vom aktuellen Zustand des technischen Systems, der im aktuellen Zustand durchgeführten Aktion sowie des daraus resultierenden Folgezustands des technischen Systems abhängt.

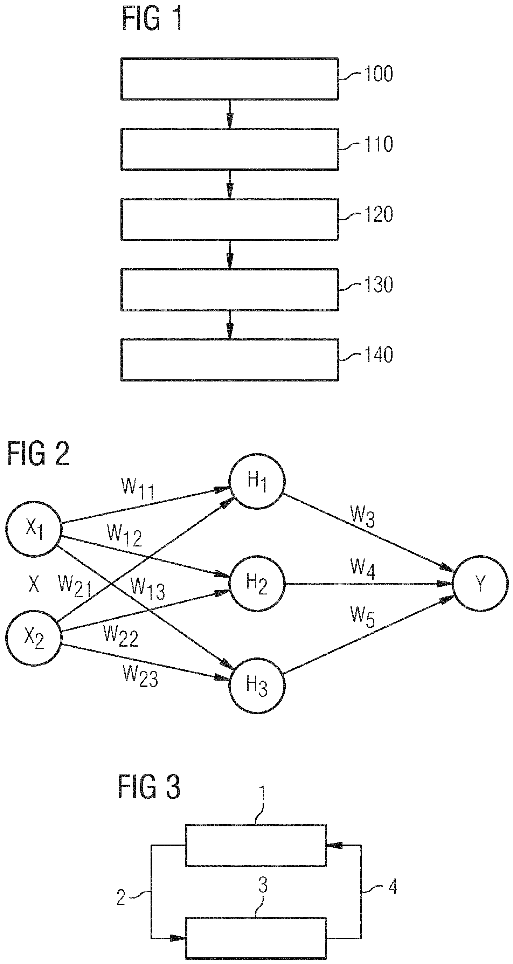

FIG 1 zeigt bei Programmpunkt 100 einen Verfahrensstand, bei dem wenigstens zwei Funktionen eines ersten Quellmodells bereitgestellt werden. Das Quellmodell beschreibt das technische Verhalten einer Quellvorrichtung. Die Quellvorrichtung kann einer realen Vorrichtung entsprechen, deren technische Funktion ähnlich der technischen Funktion der Vorrichtung oder identisch der technischen Funktion der Vorrichtung ist. Die Quellvorrichtung kann zudem einer realen Vorrichtung entsprechen, deren technischer Aufbau ähnlich dem technischen Aufbau der Vorrichtung oder identisch dem technischen Aufbau der Vorrichtung ist. Zudem kann die Quellvorrichtung auch ein Simulationsmodell darstellen, das den technischen Aufbau und/oder die technische Funktion einer Quellvorrichtung simuliert, deren technische Funktion und/oder technischer Aufbau ähnlich oder identisch der technischen Funktion oder dem technischen Aufbau der Vorrichtung ist.

Die zwei Funktionen beschreiben ein technisches Verhalten der Quellvorrichtung mit einer statistischen Ungenauigkeit. Dies bedeutet, dass das technische Verhalten der Quellvorrichtung, d.h. der Übergang von einem Zustand der Quellvorrichtung bei Vorgabe wenigstens eines Steuerwertes (Aktion) zu einem folgenden Zustand mithilfe der zwei Funktionen ermittelt wird. Mithilfe der zwei Funktionen wird der folgende Zustand der Quellvorrichtung bestimmt. Jede Funktion kann ein Quellbeobachtungsdatum für einen Zustand der Quellvorrichtung ermitteln. Die zwei Quellbeobachtungsdaten weisen eine statistische Ungenauigkeit gegenüber einem präzisen Wert des Zustandes der Quellvorrichtung auf.

Bei einem folgenden Verfahrensschritt 110 werden die zwei Quellbeobachtungsdaten der zwei Funktionen mit einem gemessenen technischen Verhalten der Vorrichtung verglichen. Dazu werden die zwei Quellbeobachtungsdaten der zwei Vorrichtungen mit einem gemessenen Beobachtungsdatum der Vorrichtung verglichen, das dem gleichen Zustandsübergang entspricht Unter dem gleichen Zustandsübergang wird der gleiche Ausgangszustand der Vorrichtung und der Quellvorrichtung und das Vorgeben des gleichen Steuerwertes beziehungsweise des gleichen Steuerverfahrens verstanden. Dieser Vergleich kann für mehrere Steuerwerte eines Steuerverfahrens und somit für mehrere Quellbeobachtungsdaten durchgeführt werden.

Aus dem Vergleich von wenigstens jeweils einem Quellbeobachtungsdatum der zwei Funktionen mit einem gemessenen Beobachtungsdatum wird jeweils eine Abweichung zwischen dem Quellbeobachtungsdatum einer Funktion und dem Beobachtungsdatum ermittelt. Somit werden Abweichungen der Quellbeobachtungsdaten der Funktionen zu den gemessenen Beobachtungsdaten ermittelt.

Bei einem folgenden Programmpunkt 120 wird für jede Funktion aus der Abweichung des wenigstens einen Quellbeobachtungsdatums und dem korrespondierenden Beobachtungsdatum der Vorrichtung ein Bewertungsfaktor ermittelt. Dazu können Abweichungen mehrere Quellbeobachtungsdaten jeder der zwei Funktionen zu den korrespondierenden Beobachtungsdaten der Vorrichtung verwendet werden, um für jede Funktion nach einer vorgegebenen Formel oder Funktion einen Bewertungsfaktor zu ermitteln. In einem einfachen Fall können die Abweichungen der Quellbeobachtungsdaten einer Funktion zu den korrespondierenden Beobachtungsdaten der Vorrichtung gemittelt werden und aus der gemittelten Abweichung nach einer vorgegebenen Formel oder Funktion ein Bewertungsfaktor ermittelt wird.

Wir betrachten die Situation, dass wir N Quellvorrichtungen, zum Beispiel N Windturbinen nutzen können, für die jeweils eine vergleichsweise große Anzahl $Z_i$ von gemessenen Beobachtungsdaten vorliegen und wir ein Modell für Prognose oder Systemidentifikation für eine weitere Vorrichtung, d.h. eine weitere Windturbine N+1 erstellen wollen. Für die Vorrichtung, d.h. die Windturbine N+1 liegt eine vergleichsweise geringe Anzahl von gemessenen Beobachtungsdaten vor, so dass ein Modell, d.h. eine Beschreibung des technischen Verhaltens der Windturbine N+1, welches nur anhand dieser Beobachtungsdaten erstellt wird, eine geringe Genauigkeit aufweisen würde.

Als Beobachtungsdaten können beispielsweise gemessene Windgeschwindigkeiten, Windrichtungen, Rotordrehzahl, Anstellwinkel der Rotorblätter und erzeugte elektrische Leistung für alle Sekunden der letzten fünf Minuten betrachtet werden. Es können jedoch auch andere technische Parameter der Windturbine verwendet werden.

Als Optimierungsziel könnte gemäß dem folgenden Beispiel eine möglichst genaue Prognose der produzierten mittleren elektrischen Leistung in den nächsten fünf Minuten betrachtet werden.

Das Verfahren kann mit folgenden Schritten durchgeführt werden:

1. Schritt:
Für die Vorrichtungen 1 bis N, im Folgenden Anlagen genannt, wird jeweils ein Bayes'sches neuronales Netz BNN_i trainiert (siehe "Weight Uncertainty in Neural Networks"; Blundell, Charles; Cornebise, Julien; Kavukcuoglu, Koray; Wierstra, Daan; eprint arXiv:1505.05424; 05/2015 ; ARXIV; In Proceedings of the 32nd International Conference on Machine Learning; ICML 2015), wobei jeweils nur die Beobachtungsdaten D_i verwendet werden, die von der Anlage i stammen. Die jeweiligen BNN_i parametrieren als Ergebnis der Trainings je eine Wahrscheinlichkeitsverteilung über Funktionen F_I, aus der Instanzen F_i_j gezogen werden können.

2. Schritt:
Für jede der Anlagen 1 bis N wird eine vorher festgelegte Anzahl M von Instanzen F_i_j aus den Wahrscheinlichkeitsverteilungen F_i gezogen. Jede dieser M * N Funktionen wird für die weitere Anlage N+1 auf den Beobachtungsdaten D_N+1 der Anlage N+1 ausgewertet. Dazu werden alle gezogenen Funktionen F_i_j auf allen Z_N+1 Beobachtungsdaten D_N+1 der Anlage N+1 ausgewertet und das Resultat der Auswertung R_i_j_ k mit den gemessenen Werten Y_k verglichen.
Dazu wird ein Fehlermaß E_i_j berechnet, zum Beispiel $E\_i\_j = 1 / Z\_N+1 * \text{"Summe von 1 bis } Z\_N+1\text{"}(R\_i\_j\_k - Y\_k)^2$.

3. Schritt:
Alle gezogenen Funktionen F_i_j werden mit einer Funktion des Fehlermaßes E_i_j gewichtet. Die Funktion für diese Wichtung W kann zum Beispiel sein:

W_i_j = 0 für alle Funktionen F_i_j, bei denen E_i_j größer als das 10-Prozent-Perzentil aller E_i_j und 1 sonst

oder

W_i_j = exp(-E_i_j / T), wobei T>0 ein geeignet zu wählender Parameter ist.

Die Wichtungen W_i_j werden danach nicht mehr verändert.

4. Schritt:

Für eine Prognose oder eine Systemidentifikation für eine neue Beobachtung z an der Anlage N+1 werden alle Funktionen F_i_j auf dieser Beobachtung ausgewertet, die Resultate werden R_i_j_z genannt.

Das Modell für die Anlage N+1 ist dann die gewichtete Summe aller Funktionen F_i_j, das heißt, das Resultat R_z ist die gewichtete Summe der Resultate R_i_j_z:

```
R_z  = „Summe von 1 bis N"(„Summe von 1 bis M"(W_i_j * R_i_j_z)) /
   „Summe von 1 bis N"(„Summe von 1 bis M"(W_i_j))
```

Jedes neuronale Bayes Netz (BNN) F_i definiert eine Wahrscheinlichkeitsverteilung über neuronale Netze.

In einer möglichen Ausführung, wird jedes Gewicht innerhalb eines F_i als eine Gauß-Verteilung über Gewichte mit Mittelwert w und Standardabweichung s betrachtet. D.h. dort, wo klassische neuronale Netze ein Gewicht haben, hat das BNN nun zwei Zahlen, Mittelwert und Standardabweichung.

Um eine Instantiierung F_i_j aus F_i zu ziehen, wird aus all den Gauß-Verteilungen der Gewichte des F_i jeweils ein Gewicht eines klassischen neuronalen Netzes gezogen.

Abhängig von der gewählten Ausführungsform können auch andere Verfahren verwendet werden, wobei die Ähnlichkeit des technischen Verhaltens der Quellmodelle im Vergleich zu dem gemessenen Verhalten der Vorrichtung zu berücksichtigen ist.

Im Folgenden wird ein weiteres Beispiel für ein Verfahren zur Ermittlung von Funktionen anderer Vorrichtungen erläutert, mit denen eine technische Funktion der Vorrichtung abgeschätzt werden kann.

Es wird eine erste Funktion bereitgestellt, die ein technisches Verhalten einer ersten Vorrichtung beschreibt. Die erste Funktion ermittelt abhängig von einem technischen Ausgangszustand der Vorrichtung und dem Ausführen wenigstens einer Aktion, d.h. z.B. Vorgabe eines Steuerbefehls, der wenigstens einen technischen Parameter beim Betreiben der ersten Vorrichtung ändert, wenigstens ein erstes Beobachtungsdatum für einen Folgezustand, in den die erste Vorrichtung übergeht. Das erste Beobachtungsdatum beschreibt wenigstens einen Aspekt oder Parameter des technischen Folgezustandes der ersten Vorrichtung, in den die erste Vorrichtung nach der Aktion übergeht.

Die erste Funktion kann ausgebildet sein, um für die Aktion weitere erste Beobachtungsdaten des Folgezustandes der ersten Vorrichtung zu ermitteln. Die weiteren ersten Beobachtungsdaten beschreiben weitere Aspekte des technischen Folgezustandes der ersten Vorrichtung nach Ausführen der Aktion. Zudem kann die erste Funktion ausgebildet sein, das technische Verhalten der ersten Vorrichtung bei Ausführen verschiedener Aktionen, insbesondere bei zeitlich nacheinander ausgeführten Aktionen in Form von weiteren ersten Beobachtungsdaten zu beschreiben.

Es wird eine festgelegte Anzahl von weiteren ersten Funktionen bereitgestellt, die das technische Verhalten der ersten Vorrichtung durch Ermittlung von weiteren ersten Beobachtungsdaten in Abhängigkeit von Aktionen, die auf die erste Vorrichtung einwirken, beschreiben. Die weiteren ersten Funktionen sind in der Weise ausgebildet, dass die ersten Beobachtungsdaten der ersten Funktionen bei gleicher Aktion oder bei gleichen Aktionen, die auf die erste Vorrichtung einwirken, eine vorgegebene statistische Verteilung aufweisen.

Die ersten Funktionen können beispielsweise durch ein abhängig von gemessenen ersten Beobachtungsdaten trainiertes erstes Bayes Netz bereitgestellt werden. Dabei können die ersten Beobachtungsdaten Gewichtungen des Bayes Netzes darstellen und z.B. mit einer Gauß-Funktion variieren. Entsprechend variieren auch die vom ersten Bayes Netz ermittelten ersten Beobachtungsdaten für den gleichen Zustand der ersten Vorrichtung und die gleiche Aktion, die auf die erste Vorrichtung einwirkt.

Es wird eine zweite Funktion bereitgestellt, die ein technisches Verhalten einer zweiten Vorrichtung beschreibt. Die zweite Funktion ermittelt abhängig von wenigstens einer Aktion, d.h. z.B. einem Steuerbefehl, der auf die zweite Vorrichtung einwirkt, wenigstens ein zweites Beobachtungsdatum für einen Folgezustand, in den die zweite Vorrichtung durch die Aktion übergeht. Das zweite Beobachtungsdatum beschreibt wenigstens einen Aspekt oder Parameter eines technischen Folgezustandes der zweiten Vorrichtung nach Einwirken der Aktion. Die zweite Funktion kann ausgebildet sein, um für die Aktion weitere zweite Beobachtungsdaten der zweiten Vorrichtung zu ermitteln. Die weiteren zweiten Beobachtungsdaten beschreiben weitere Aspekte des technischen Zustandes der zweiten Vorrichtung nach der Aktion. Zudem kann die zweite Funktion ausgebildet sein, das technische Verhalten der zweiten Vorrichtung bei Einwirken verschiedener Aktionen, d.h. Steuerbefehle, die z.B. zeitlich nacheinander ausgeführt werden, in Form von weiteren zweiten Beobachtungsdaten zu beschreiben.

Es wird eine festgelegte Anzahl von weiteren zweiten Funktionen bereitgestellt, die das technische Verhalten der zweiten Vorrichtung durch Ermittlung von weiteren zweiten Beobachtungsdaten in Abhängigkeit von Aktionen, die auf die zweite Vorrichtung einwirken, beschreiben. Die weiteren zweiten Funktionen sind in der Weise ausgebildet, dass die zweiten Beobachtungsdaten der zweiten Funktionen bei gleicher Aktion oder bei gleichen Aktionen, die auf die zweite Vorrichtung einwirken, eine vorgegebene statistische Verteilung aufweisen. Die zweiten Funktionen können beispielsweise durch ein abhängig von gemessenen Beobachtungsdaten der zweiten Vorrichtung trainiertes zweites Bayes Netz bereitgestellt werden. Dabei können die zweiten Beobachtungsdaten, die die Gewichtungen des Bayes Netzes darstellen, z.B. mit einer Gauß-Funktion variieren. Entsprechend variieren auch die vom zweiten Bayes Netz ermittelten zweiten Beobachtungsdaten für den gleichen Zustand der zweiten Vorrichtung und die gleiche Aktion, die auf die zweite Vorrichtung einwirkt.

Es werden Beobachtungsdaten der Vorrichtung in Abhängigkeit von Aktionen, d.h. z.B. Vorgabe von Steuerwerten gemessen, die auf die Vorrichtung einwirken. Die Vorrichtung ist beispielsweise wenigstens teilweise in der technischen Funktion ähnlich oder identisch zu der technischen Funktion der ersten Vorrichtung und/oder zu der technischen Funktion der zweiten Vorrichtung.

Die gemessenen Beobachtungsdaten der Vorrichtung werden mit den ermittelten ersten Beobachtungsdaten einer ersten Funktion verglichen, die für den gleichen Ausgangszustand der ersten Vorrichtung und der Vorrichtung und für die gleiche Aktion ermittelt wurden. Im einfachsten Fall kann der Vergleich in dem Bilden einer Differenz zwischen einem gemessenen Beobachtungsdatum der Vorrichtung und einem ermittelten ersten Beobachtungsdatum der ersten Funktion liegen.

Es wird ein Bewertungsfaktor für das erste Beobachtungsdatum in Abhängigkeit vom Vergleich ermittelt. Der Bewertungsfaktor gibt einen Wert an, wie gut das gemessene Beobachtungsdatum der ersten Funktion der ersten Vorrichtung das technische Verhalten der Vorrichtung beschreibt. Auf diese Weise kann für eine Vielzahl von ersten Beobachtungsdaten der ersten Funktion jeweils ein Bewertungsfaktor ermittelt werden. Aus den Bewertungsfaktoren der ersten Beobachtungsdaten wird ein gemittelter Bewertungsfaktor gebildet. Mit dem gemittelten Bewertungsfaktor wird die erste Funktion bewertet.

In analoger Weise werden die gemessenen Beobachtungsdaten der Vorrichtung mit den ermittelten ersten Beobachtungsdaten von weiteren ersten Funktionen verglichen. Im einfachsten Fall kann der Vergleich in dem Bilden einer Differenz zwischen einem gemessenen Beobachtungsdatum und einem ermittelten ersten Beobachtungsdatum liegen. Es wird ein Bewertungsfaktor für das erste Beobachtungsdatum in Abhängigkeit vom Vergleich ermittelt. Der Bewertungsfaktor gibt einen Wert an, wie gut die erste Funktion der ersten Vorrichtung für das betrachtete Beobachtungsdatum das technische Verhalten der Vorrichtung beschreibt. Auf diese Weise kann für eine Vielzahl von ersten Beobachtungsdaten von weiteren ersten Funktionen jeweils ein Bewertungsfaktor ermittelt werden. Aus den Bewertungsfaktoren der ersten Beobachtungsdaten wird ein gemittelter Bewertungsfaktor für jede weitere erste Funktion gebildet. Mit den gemittelten Bewertungsfaktoren werden die weiteren ersten Funktionen bewertet.

In einer Ausführung werden für eine Abschätzung eines Beobachtungsdatums der Vorrichtung für eine vorgegebene Aktion bei einem vorgegebenen Zustand der Vorrichtung wenigstens die mit dem jeweiligen Bewertungsfaktor bewerteten ersten Beobachtungsdaten von zwei ersten Funktionen der ersten Quellvorrichtung für die vorgegebene Aktion summiert und der arithmetische Mittelwert gebildet. Beispielsweise können für die Ermittlung eines Beobachtungsdatums der Vorrichtung für eine vorgegebene Aktion bei einem vorgegebenen Zustand der Vorrichtung die mit dem jeweiligen Bewertungsfaktor bewerteten ersten Beobachtungsdaten aller ersten Funktionen summiert werden und der arithmetische Mittelwert gebildet werden.

In einer Ausführung werden für eine Abschätzung einer technischen Funktion der Vorrichtung wenigstens zwei mit den gemittelten Bewertungsfaktoren bewerteten ersten Funktionen gemittelt und als gemittelte erste Funktion verwendet. Beispielsweise können für die Ermittlung einer technischen Funktion der Vorrichtung mehrere, insbesondere alle mit den gemittelten Bewertungsfaktoren bewerteten ersten Funktionen gemittelt werden und als gemittelte erste Funktion verwendet werden.

Die gemessenen Beobachtungsdaten der Vorrichtung werden mit den ermittelten zweiten Beobachtungsdaten einer zweiten Funktion der zweiten Quellvorrichtung für die gleichen Aktionen bei den gleichen Zuständen der Vorrichtung und der zweiten Quellvorrichtung verglichen. Im einfachsten Fall kann der Vergleich in dem Bilden einer Differenz zwischen einem gemessenen Beobachtungsdatum und einem ermittelten zweiten Beobachtungsdatum liegen.

Es wird ein Bewertungsfaktor für das zweite Beobachtungsdatum in Abhängigkeit von dem Ergebnis des Vergleichs ermittelt. Der Bewertungsfaktor gibt einen Wert an, wie gut die zweite Funktion der zweiten Quellvorrichtung für das betrachtete Beobachtungsdatum das technische Verhalten der Vorrichtung beschreibt. Auf diese Weise kann für eine Vielzahl von zweiten Beobachtungsdaten der zweiten Funktion jeweils ein Bewertungsfaktor ermittelt werden. Aus den Bewertungsfaktoren der zweiten Beobachtungsdaten wird ein gemittelter zweiter Bewertungsfaktor gebildet. Mit dem gemittelten Bewertungsfaktor wird die zweite Funktion bewertet. Die Berechnungen und Ermittlungen werden analog zu den ersten Funktionen ausgeführt.

In analoger Weise werden die gemessenen Beobachtungsdaten der Vorrichtung mit den ermittelten zweiten Beobachtungsdaten von weiteren zweiten Funktionen für die gleichen Aktionen ausgehend von den gleichen Zuständen der Vorrichtung und der zweiten Quellvorrichtung verglichen. Im einfachsten Fall kann der Vergleich in dem Bilden einer Differenz zwischen einem gemessenen Beobachtungsdatum und einem ermittelten zweiten Beobachtungsdatum liegen.

Es wird ein Bewertungsfaktor für das zweite Beobachtungsdatum in Abhängigkeit von dem Ergebnis des Vergleichs ermittelt. Der Bewertungsfaktor gibt einen Wert an, wie gut die zweite Funktion der zweiten Quellvorrichtung für das betrachtete Beobachtungsdatum das technische Verhalten der Vorrichtung beschreibt. Auf diese Weise kann für eine Vielzahl von zweiten Beobachtungsdaten von weiteren zweiten Funktionen jeweils ein zweiter Bewertungsfaktor ermittelt werden. Aus den Bewertungsfaktoren der zweiten Beobachtungsdaten wird ein gemittelter zweiter Bewertungsfaktor für jede weitere zweite Funktion gebildet. Mit den gemittelten zweiten Bewertungsfaktoren werden die weiteren zweiten Funktionen bewertet.

In einer Ausführung werden für eine Abschätzung eines Beobachtungsdatums der Vorrichtung für eine vorgegebene Aktion wenigstens die mit dem jeweiligen Bewertungsfaktor bewerteten zweiten Beobachtungsdaten von zwei zweiten Funktionen für die vorgegebene Aktion bei gleichem Zustand der Vorrichtung und der zweiten Quellvorrichtung summiert und der arithmetische Mittelwert gebildet. Beispielsweise können für die Ermittlung eines Beobachtungsdatums der Vorrichtung für eine vorgegebene Aktion bei einem vorgegebenen Zustand der Vorrichtung die mit dem jeweiligen Bewertungsfaktor bewerteten zweiten Beobachtungsdaten aller zweiten Funktionen für die gleiche vorgegebene Aktion bei gleichem Zustand summiert werden und der arithmetische Mittelwert gebildet werden.

In einer Ausführung werden für die Abschätzung einer technischen Funktion der Vorrichtung wenigstens zwei mit den gemittelten Bewertungsfaktoren bewerteten zweiten Funktionen gemittelt und als gemittelte zweite Funktion verwendet. Beispielsweise können für die Ermittlung einer technischen Funktion der Vorrichtung mehrere, insbesondere alle mit den gemittelten zweiten Bewertungsfaktoren bewerteten zweiten Funktionen gemittelt werden und als gemittelte zweite Funktion verwendet werden.

In einer Ausführung werden für die Abschätzung einer technischen Funktion der Vorrichtung wenigstens die mit dem gemittelten Bewertungsfaktor bewertete erste Funktion und die wenigstens mit dem gemittelten zweiten Bewertungsfaktor bewertete zweite Funktion gemittelt und als gemittelte gemeinsame Funktion verwendet. Beispielsweise können für die Abschätzung einer technischen Funktion der Vorrichtung mehrere, insbesondere alle mit den gemittelten Bewertungsfaktoren bewerteten ersten Funktionen des ersten Quellmodells und mehrere, insbesondere alle mit den gemittelten zweiten Bewertungsfaktoren bewerteten zweiten Funktionen des zweiten Quellmodells gemittelt werden und als gemittelte gemeinsame Funktion verwendet werden.

Bei Programmpunkt 130 wird mithilfe der bewerteten Funktionen des wenigstens einen Quellmodells wenigstens ein Beobachtungsdatum des technischen Verhaltens der Vorrichtung abgeschätzt. Abhängig von der gewählten Ausführungsform kann eine Vielzahl von Beobachtungsdaten des technischen Verhaltens der Vorrichtung mithilfe der Funktionen des wenigstens einen Quellmodells abgeschätzt werden.

Zudem können abhängig von der gewählten Ausführungsform nicht nur zwei Funktionen einen Quellmodells, sondern mehrere oder eine Vielzahl von Funktionen eines Quellmodelles verwendet werden, die mehrere oder eine Vielzahl von Quellbeobachtungsdaten für einen Zustandsübergang von einem Ausgangszustand nach einer Steuerung (Aktion) in einen Folgezustand beschreiben. Die Quellbeobachtungsdaten einer Funktion weisen die vorgegebene statistische Ungenauigkeit auf. Die vorgegebene statistische Ungenauigkeit kann beispielsweise eine Gaußverteilung aufweisen, wobei die Gaußverteilung durch einen vorgegebenen Mittelwert und eine vorgegebene Standardabweichung festgelegt ist.

Abhängig von der gewählten Ausführungsform können nicht nur Funktionen eines Quellmodelles einer Quellvorrichtung, sondern Funktionen mehrerer Quellmodelle mehrerer Quellvorrichtungen verwendet werden. Durch die Verwendung mehrerer Quellmodelle gleicher oder verschiedener Quellvorrichtungen können mehr Quellbeobachtungsdaten und/oder verschiedene technische Verhalten der Quellvorrichtungen berücksichtigt werden, um das technische Verhalten der Vorrichtung abzuschätzen.

Das zweite Quellmodell weist wenigstens zwei Funktionen auf, die ein technisches Verhalten einer zweiten Quellvorrichtung mit einer statistischen Ungenauigkeit beschreiben. Die statistische Ungenauigkeit kann gleich oder unterschiedlich zu der statistischen Ungenauigkeit der Funktionen des ersten Quellmodells sein. Die Funktionen des zweiten Quellmodelles werden in der gleichen Weise wie die Funktionen des ersten Quellmodells mit einem gemessenen technischen Verhalten der Vorrichtung verglichen. Ebenso wird für jede Funktion des zweiten Quellmodells aufgrund des Vergleichs ein Bewertungsfaktor ermittelt.

Folglich kann mithilfe der bewerteten Funktionen des zweiten Quellmodells und mithilfe der bewerteten Funktionen des ersten Quellmodells bei Programmpunkt 130 wenigstens ein Beobachtungsdatum des technischen Verhaltens der Vorrichtung abgeschätzt werden.

Weiterhin kann abhängig von der gewählten Ausführungsform nicht nur ein Beobachtungsdatum der Vorrichtung bei Programmpunkt 130 abgeschätzt werden, sondern es kann mithilfe der bewerten Funktionen des wenigstens einen Quellmodells, insbesondere von mehreren Quellmodellen ein technisches Verhalten der Vorrichtung für eine vorgegebene Folge von Steuerwerten (Aktionen), die auf die Vorrichtung einwirken, abgeschätzt werden. Somit kann eine Steuerpolicy, d.h. eine Abfolge von Steuerwerten, für ein gewünschtes technisches Verhalten der Vorrichtung ermittelt werden. Der wenigstens eine Steuerwert oder die Steuerpolicy kann zur Steuerung der Vorrichtung verwendet werden.

Zudem kann abhängig von der gewählten Ausführungsform mithilfe der bewerteten Funktionen des wenigstens einen Quellmodells ein Modell für ein technisches Verhalten der Vorrichtung ermittelt werden. Beispielsweise kann das Modell für das technische Verhalten der Vorrichtung mithilfe eines neuronalen Netzes ermittelt werden.

In einer Ausführungsform kann mithilfe der bewerteten Funktionen des wenigstens einen Quellmodells bei einem folgenden Programmpunkt 140 mithilfe eines Lernverfahrens ein Steuerverfahren für ein gewünschtes technisches Verhalten der Vorrichtung ermittelt werden. Das Lernverfahren kann beispielsweise als verstärkendes Lernverfahren ausgebildet sein.

Bei dem verstärkenden Lernverfahren kann die statistische Unsicherheit der Funktionen des wenigstens einen Quellmodells als Steuerwert berücksichtigt werden. Insbesondere kann die statistische Unsicherheit auf einen vorgegebenen Wertebereich hin optimiert werden, um ein gewünschtes Steuerverfahren zu ermitteln.

FIG 2 zeigt in einer schematischen Darstellung ein Beispiel für ein neuronales Bayes Netz, mit dem ein Quellmodell einer Quellvorrichtung simuliert werden kann. Das Bayes Netz ist eine spezielle Ausführung eines neuronalen Netzwerkes, bei dem für ein technisches Verhalten einer Vorrichtung bei einem Eingangsvektor x1, x2 mithilfe von Gewichtsverteilungen w11, w12, w13, w21, w22, w23, w3, w4, w5, wobei jede Gewichtsverteilung eine statistische Verteilung aufweist, über wenigstens eine verdeckte Schicht mit Knoten h1, h2, h3 wenigstens ein Quellbeobachtungsdatum y ermittelt werden kann. Das Bayes Netz wird anhand von vorgegebenen, insbesondere gemessenen Daten einer Quellvorrichtung trainiert, um die Gewichtsverteilungen w11, w12, w13, w21, w22, w23, w3, w4, w5 zu ermitteln. Die Gewichtsverteilungen können unterschiedliche Funktionen für die Verteilung des Gewichtes aufweisen, wobei die Gewichtsverteilungen in der Weise gewählt sind, dass das Modell den Ausgangsvektor y bei Vorliegen eines Eingangsvektors x mit der Wahrscheinlichkeitsverteilung w festlegt.

Die Wahrscheinlichkeitsverteilung wird mit folgender Formel bestimmt: $P(y|x,w)$, wobei x ein Eingangsvektor mit Aktionen x1, x2 usw. mit einer Wahrscheinlichkeit w auf einen Ausgangsvektor y abbildet. Die Gewichtsverteilungen können beispielsweise mithilfe einer Maximum-Likelihood-Estimation mit einem vorgegebenen Satz von Trainingsdaten, die Eingangsvektoren auf Ausgangsvektoren abbilden, wobei durch die Maximum-Likelihood-Estimation Gewichte w(MLE) nach folgender Formel berechnet werden:

$$w(MLE) = \text{argmax} \log P(D/w)$$

$$= \text{argmax} \sum_{i} \log P(yi/xi, w)$$

Diese Berechnung kann typischerweise mithilfe eines Gradientenverfahrens (Gradient Descent) ermittelt werden, wobei angenommen wird, dass logP(D/w) differenzierbar nach w ist. Eine genauere Beschreibung einer möglichen Ausführungsform des Bayes Netzwerkes kann dem Artikel "Weight Uncertainty in Neural Networks", Charles Blundell et al. arXiv:1505.05424v2, 21. Mai 2015, Google DeepMind entnommen werden.

Gemäß dem beschriebenen Bayes Netz von FIG 2 werden für vorgegebene erste und zweite Quellvorrichtungen jeweils ein erstes und ein zweites Quellmodell mit wenigstens zwei, insbesondere mehreren Funktionen ermittelt. Die einzelnen Funktionen des ersten und des zweiten Quellmodells werden dadurch erhalten, dass von den einzelnen Gewichtsverteilungen w11, w12, w13, w21, w22, w23, w3, w4, w5 jeweils bestimmte Werte ausgewählt werden und somit eine bestimmte Anzahl von Funktionen zur Abbildung des Eingangsvektors x auf den Ausgangsvektor y erhalten werden.

FIG 3 zeigt in einer schematischen Darstellung ein selbstverstärkendes Lernverfahren.

Das Lernverfahren kann eingesetzt werden, um eine Steuerung oder Regelung mit einem gewünschten technischen Verhalten der Vorrichtung zu ermitteln.

Die mit dem Lernverfahren ermittelte Steuerung oder Regelung wird an dem technischen System, d.h. der Vorrichtung eingesetzt, um ein gewünschtes technisches Verhalten der Vorrichtung zu erreichen. Beispielsweise kann das gewünschte Verhalten darin bestehen, eine Windturbine so zu regeln, dass die erzeugte Leistung maximiert wird und gleichzeitig gewisse Belastungen der Rotorblätter nicht überschritten werden. Es können jedoch auch andere gewünschte technische Verhalten wie z.B. hoher Wirkungsgrad usw. mithilfe der Steuerung oder Regelung erreicht werden.

Um eine möglichst dem gewünschten technischen Verhalten entsprechende Steuerung oder Regelung zu erhalten, ist es unter gewissen Umständen vorteilhaft, die Regelung anhand von Beobachtungsdaten der technischen Anlage zu trainieren, d.h. die Regelung von den Beobachtungsdaten lernen zu lassen. Dies ist mit Methoden des Reinforcement Learning möglich. Um die erforderliche Menge an Beobachtungsdaten der technischen Anlage möglichst gering zu halten, ist es unter gewissen Umständen vorteilhaft zusätzliche Beobachtungsdaten ähnlicher technischen Vorrichtungen als Quellvorrichtungen für ein Transfer Learning (auch Transferlernen) zu verwenden.

Neu ist in einem solchen Ansatz, der das Transferlernen nutzt, mit Methoden des Reinforcement Learnings eine Steuerung oder Regelung zu lernen, die eine Unsicherheit eines technischen Verhaltens einer Quellvorrichtung für die Abschätzung des Verhaltens der Vorrichtung verwendet, um daraus beispielsweise ein Systemmodell oder eine Steuerpolicy für die Vorrichtung zu ermitteln.

Die Unsicherheit ist dabei ein Maß dafür, wie unsicher die Richtigkeit eines technischen Verhaltens der Vorrichtung durch das technische Verhalten der Quellvorrichtung abgeschätzt werden kann. Die Unsicherheit schätzt die Wahrscheinlichkeit des wahren Wertes eines Beobachtungsdatums der Vorrichtung durch die Funktionen des Quellmodells der Quellvorrichtung ab.

Die abgeschätzte Unsicherheit kann beim Lernverfahren dabei so berücksichtigt werden, dass eine Verringerung der Unsicherheit die Belohnungsfunktion (reward function, Reward-Funktion) des Lernverfahrens erhöht. Dies bedeutet, dass alle Aktionen belohnt werden, die kurz- oder langfristig zu einer Verringerung der Unsicherheit führen. Es wird angenommen, dass die Unsicherheit eine gewisse Übereinstimmung mit der wahren Unsicherheit aufweist und dies zu gesteigerter Robustheit der Lösung, da die Wahrscheinlichkeit für das Auftreten eines abweichenden Verhaltens der Realität im Vergleich zu der gelernten Schätzung verringert wird.

Somit lässt sich also bei gleicher Datenmenge eine Steuerung oder Regelung lernen, deren Wahrscheinlichkeit für Misserfolg geringer ist. Man erhält also einen verbesserten Erwartungswert der Leistungsfähigkeit (Performance). Dies bedeutet auch, dass bei für einen vorgegeben Wert des Erwartungswertes der Leistungsfähigkeit, der nicht unterschritten werden darf, die Datenmenge kleiner sein darf.

Alternativ kann die Unsicherheit so berücksichtigt werden, dass eine Erhöhung der Unsicherheit die Belohnungsfunktion (reward function, Reward-Funktion) erhöht. Dies bedeutet eine Belohnung aller Aktionen, die kurz- oder langfristig zu einer Erhöhung der Unsicherheit führen. Bei dieser Vorgehensweise wird angenommen, dass die Unsicherheit eine gewisse Übereinstimmung mit der wahren Unsicherheit aufweist. Somit wird eine Lösung erhalten, die die Wahrscheinlichkeit für das Auftreten eines abweichenden Verhaltens der Realität im Vergleich zu der gelernten Schätzung erhöht. Eine solche Abweichung liefert Information über die Realität genau dort, wo die Schätzung verbesserungswürdig ist. Somit lässt sich also bei gleicher Datenmenge eine Regelung oder Steuerung lernen, die dazu führt, dass möglichst effektiv Beobachtungen erzeugt werden, die das Lernen begünstigen. Wenn nun mit den solchermaßen erzeugten Beobachtungsdaten eine Regelung nach dem vorherigen Verfahren gelernt wird, wird eine geforderte Leistungsfähigkeit (Performance) mit einer möglichst geringen Datenmenge gelernt.

FIG 3 zeigt in einer schematischen Darstellung ein Grundprinzip für ein Lernverfahren in Form eines verstärkenden Lernverfahrens. Es ist eine Steuereinheit 1 vorgesehen, die eine Steuerung beispielsweise in Form der Vorgabe eines Steuerwertes 2, d.h. eine Aktion für eine Vorrichtung 3 vorgibt. Zudem werden Zustände der Vorrichtung 3 mithilfe von Sensorsignalen 4 von der Steuereinheit 1 erfasst. In der Steuereinheit 1 ist ein gewünschtes technisches Verhalten der Vorrichtung 3 abgelegt. Die Steuereinheit 1 vergleicht den Zustand der Vorrichtung nach der Ansteuerung mit dem Steuerwert, der anhand der Sensorsignale 4 erfasst wurde, mit einem Zustand des gewünschten Verhaltens. Abhängig von dem Unterschied zwischen dem gemessenen Zustand der Vorrichtung und dem gewünschten Zustand der Vorrichtung wird der Aktion 2 beispielsweise mithilfe einer Belohnungsfunktion ein spezifischer Wert zugeordnet. Basierend auf diesen Werten wird eine Strategie entwickelt, mit welchen Aktionen schnellstmöglich oder bestmöglich das gewünschte technische Verhalten der Vorrichtung erreicht wird. Somit können auf einfache und schnelle Weise Steuerstrategien (Policies) erlernt werden, mit denen ein gewünschtes technisches Verhalten der Vorrichtung erreicht wird.

In der hier beschriebenen Ausführungsform wird rechnergestützt basierend auf Trainingsdaten eine Aktionsauswahlregel gelernt, wobei eine Aktionsauswahlregel im Allgemeinen angibt, welche Aktion in einem vorgegebenen Zustand des technischen Systems bevorzugt auszuführen ist. Die Aktionsauswahlregel kann hierbei deterministisch sein, d.h. es wird eine bestimmte Aktion durch die Regel festgelegt, sie kann jedoch auch stochastisch sein, d.h. die Aktionsauswahlregel gibt eine Wahrscheinlichkeitsverteilung der durchzuführenden Aktionen ausgehend von einem Zustand an. Ziel des Verfahrens ist z.B. das Lernen einer sog. sicherheitsoptimalen Aktionsauswahlregel, welche nicht notwendigerweise im Hinblick auf die erwartete Performanz optimal ist, sondern einer statistischen Mindestanforderung an die Aktionsauswahlregel genügt. Auf diese Weise können Aktionsauswahlregeln gelernt werden, welche zwar nicht das Optimalitätskriterium der maximalen erwarteten Performanz erfüllen, jedoch eine garantierte Performanz maximieren.

Es wird ein bestärkendes Lernverfahren verwendet, bei dem die Aktionsauswahlregel basierend auf dem entsprechenden Optimalitätskriterium gelernt wird. Das Optimalitätskriterium wird dabei durch eine entsprechende Bewertung R repräsentiert, wobei die Bewertung für einen Zustand s, die in diesem Zustand s durchgeführte Aktion a und den Folgezustand s' angibt, wie erstrebenswert die durchgeführte Aktion a im Hinblick auf den Optimalbetrieb des technischen Systems ist. Der Optimalbetrieb kann in Abhängigkeit von dem betrachteten technischen System beliebig festgelegt sein. Beispielsweise sind Kriterien für einen solchen Betrieb, dass keine Zustände auftreten, die zu einer Beschädigung bzw. Zerstörung des technischen Systems führen, bzw. dass ein optimaler Wirkungsgrad im Betrieb des technischen Systems erreicht wird. Bei einer Gasturbine könnte der Optimalbetrieb beispielsweise dadurch spezifiziert sein, dass ein hoher Wirkungsgrad erreicht wird, ohne dass ein Brummen der Turbine auftritt.

Gemäß dem bestärkenden Lernen wird nach einer Aktionsauswahlregel $\pi :S{\rightarrow}A$ gesucht, welche unter der Annahme eines Markov-Entscheidungs-Prozesses M:=(S, A, PT , R) mit dem Zustandsraum S, dem Aktionsraum A sowie der Wahrscheinlichkeitsverteilung PT:S$\times$A$\times$S$\rightarrow$ [0,1] zu einem optimalen Betrieb des technischen Systems führt. Dabei wird jeder Zustand, die in diesem Zustand ausgeführte Aktion und der daraus resultierende Folgezustand mit der Belohnungsfunktion R:S$\times$A$\times$S$\rightarrow$ R bewertet. Der Optimalbetrieb wird dabei durch das Maximum der sog. Value-Funktion beschrieben, welche wie folgt lautet:

$$V^{\pi}(s) = \sum_{s'} P(s' \mid s, a) [R(s, a, s') + \gamma V^{\pi}(s')]$$

Diese Value-Funktion ist die erwartete diskontierte Summe von zukünftigen Bewertungen, wobei $\gamma \in [0,1]$ der Diskontierungsfaktor ist. Dabei wird in der Regel die sog. Q-Funktion $Q\pi$ (s, a) verwendet, welche die erwartete diskontierte Belohnung nach der Wahl der Aktion a im Zustand s und dem darauffolgenden Befolgen der Aktionsauswahlregel $\pi$ repräsentiert. Die Q-Funktion für die optimale Aktionsauswahlregel $Q\pi^* = Q^*$ ist dabei durch eine Lösung der sog. Bellman-Optimalitäts-Gleichung gegeben, welche wie folgt lautet:

$$Q^*(s, a) = E_{s'}[R(s, a, s') + \gamma V^*(s')] = E_{s'} \lfloor R(s, a, s') + \gamma \max_{a'} Q^*(s' + a') \rfloor$$

Es' ist dabei der Erwartungswert. Ausgehend von Q* gilt für die optimale Aktionsauswahlregel $\pi^*(s)$=arg max$a$ Q*(s,a), wobei $\pi^*$ eine deterministische Aktionsauswahlregel darstellt. Wie bereits oben erwähnt, kann die Aktionsauswahlregel jedoch auch als stochastische Aktionsauswahlregel $\pi$(a|s) ausgestaltet sein, welche die Wahrscheinlichkeit für die Wahl der Aktion a im Zustand s liefert.

Die obige Bellman-Optimalitäts-Gleichung wird durch die Bellman-Iteration gelöst.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Computerimplementiertes Verfahren zum Abschätzen eines technischen Verhaltens einer Vorrichtung, insbesondere einer Vorrichtung zum Erzeugen von Energie, wobei ein Quellmodell einer Quellvorrichtung verwendet wird, wobei das Quellmodell wenigstens zwei Funktionen aufweist, wobei die zwei Funktionen ein technisches Verhalten der Quellvorrichtung mit einer statistischen Ungenauigkeit beschreiben, wobei die Funktionen des Quellmodells mit einem gemessenen technischen Verhalten der Vorrichtung verglichen werden, wobei für die Funktionen aufgrund des Vergleiches Bewertungsfaktoren ermittelt werden, wobei die Funktionen mit den Bewertungsfaktoren bewertet werden, und wobei mithilfe der bewerteten Funktionen des Quellmodells wenigstens ein Wert des technischen Verhaltens der Vorrichtung abgeschätzt wird.

2. Verfahren nach Anspruch 1, wobei die Funktionen des Quellmodells mithilfe eines Bayes Netzes ermittelt werden, wobei das Bayes Netz anhand von Messdaten der Quellvorrichtung trainiert wurde.

3. Verfahren nach Anspruch 1, wobei die Funktionen des Quellmodells mithilfe eines Gauß'schen Prozesses anhand von Messdaten der Quellvorrichtung ermittelt werden.

4. Verfahren nach einem der vorhergehenden Ansprüche, wobei ein zweites Quellmodell einer zweiten Quellvorrichtung verwendet wird, wobei das zweite Quellmodell wenigstens zwei Funktionen aufweist, wobei die zwei Funktionen ein technisches Verhalten der zweiten Quellvorrichtung mit einer statistischen Ungenauigkeit beschreiben, wobei die Funktionen des zweiten Quellmodells mit einem gemessenen technischen Verhalten der Vorrichtung verglichen werden, wobei für die Funktionen des zweiten Quellmodells aufgrund des Vergleiches Bewertungsfaktoren ermittelt werden, wobei die Funktionen mit den Bewertungsfaktoren bewertet werden, und wobei mithilfe der bewerteten Funktionen des zweiten Quellmodells und mithilfe der bewerteten Funktionen des ersten Quellmodells wenigstens ein Wert des technischen Verhaltens der Vorrichtung abgeschätzt wird.

**5.** Verfahren nach einem der vorhergehenden Ansprüche, wobei mithilfe der bewerteten Funktionen des wenigstens einen Quellmodells ein technisches Verhalten der Vorrichtung für eine vorgegebene Anzahl von Steuerwerten, die auf die Vorrichtung einwirken, abgeschätzt wird.

**6.** Verfahren nach einem der vorhergehenden Ansprüche, wobei mithilfe der bewerteten Funktionen des wenigstens einen Quellmodells ein Modell für ein technisches Verhalten der Vorrichtung ermittelt wird.

**7.** Verfahren nach einem der vorhergehenden Ansprüche, wobei mithilfe der bewerteten Funktionen des wenigstens einen Quellmodells und mithilfe eines Lernverfahrens ein Steuerverfahren mit wenigstens einem Steuerwert für ein gewünschtes technisches Verhalten der Vorrichtung ermittelt wird.

**8.** Verfahren nach Anspruch 7, wobei als Lernverfahren ein verstärkendes Lernverfahren verwendet ist.

**9.** Verfahren nach Anspruch 8, wobei die statistische Unsicherheit der Funktionen des wenigstens einen Quellmodells beim Lernverfahren als Steuerwert berücksichtigt wird, insbesondere die statistische Unsicherheit auf einen vorgegebenen Wertebereich optimiert wird, um das gewünschte Steuerverfahren zu ermitteln.

**10.** Verfahren nach einem der vorhergehenden Ansprüche, wobei die statistische Unsicherheit einer Funktion eines Quellmodells eine Gaußverteilung aufweist, wobei die Gaußverteilung durch einen vorgegebenen Mittelwert und eine vorgegebene Standardabweichung festgelegt ist.

**11.** Verfahren nach einem der vorhergehenden Ansprüche, wobei die technische Funktion der Vorrichtung charakterisiert ist durch Zustände, die die Vorrichtung im Betrieb einnehmen kann, wobei die Vorrichtung durch eine Aktion, die während des Betriebes zum Steuern der Vorrichtung ausgeführt wird, von einem Zustand in einen folgenden Zustand übergeführt wird, wobei ein Zustand der Vorrichtung wenigstens ein Beobachtungsdatum aufweist, wobei eine Funktion eines Quellmodells wenigstens ein Quellbeobachtungsdatum beschreibt, wobei ein erster Bewertungsfaktor für das Quellbeobachtungsdatum ermittelt wird, wobei der erste Bewertungsfaktor abhängig von einem Vergleich des Quellbeobachtungsdatums mit einem gemessenen Beobachtungsdatum der Vorrichtung für die gleiche Aktion ermittelt wird, wobei abhängig von dem Vergleich der Bewertungsfaktor für die Funktion abgeschätzt wird.

**12.** Verfahren nach einem der vorhergehenden Ansprüche, wobei die wenigstens eine Quellvorrichtung wenigstens eine vorgegebene ähnliche Eigenschaft oder wenigstens eine vorgegebene identische Eigenschaft im Aufbau und/oder in einer Funktionsweise wie die Vorrichtung aufweist.

**13.** Verfahren nach einem der Ansprüche 7 bis 12, wobei die Vorrichtung mit den ermittelten Steuerwerten gesteuert wird.

**14.** Verfahren nach einem der Ansprüche 6 bis 13, wobei das Modell für das technische Verhalten der Vorrichtung als neuronales Netz simuliert wird, und wobei anhand von Daten der Funktionen des wenigstens einen Quellmodells und anhand von gemessenen Beobachtungsdaten der Vorrichtung trainiert wird.

**15.** Verfahren nach einem der vorhergehenden Ansprüche, wobei der Bewertungsfaktor eine Funktion aufweist, wobei die Funktion von einer Abweichung des Beobachtungsdatums des Quellmodells von einem gemessenen Beobachtungsdatum der Vorrichtung abhängt, wobei insbesondere die Funktion den Wert 1 aufweist, wenn die Abweichung kleiner als ein vorgegebener Schwellwert ist, und wobei die Funktion den Wert 0 aufweist, wenn die Abweichung größer als der Schwellwert ist, oder wobei insbesondere die Funktion exponentiell von der Abweichung abhängt.

**16.** Steuereinheit, die ausgebildet ist, ein Verfahren nach einem der vorhergehenden Ansprüche auszuführen.

**17.** Computerprogrammprodukt, das ausgebildet ist, um ein Verfahren nach einem der Ansprüche 1 bis 15 auszuführen.

FIG 1

FIG 2

FIG 3

**Europäisches Patentamt**
**European Patent Office**
**Office européen des brevets**

# EUROPÄISCHER RECHERCHENBERICHT

**Nummer der Anmeldung**

EP 18 19 4723

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2016 224207 A1 (SIEMENS AG [DE]) 7. Juni 2018 (2018-06-07) * das ganze Dokument * ----- | 1-17 | INV. G05B17/02 G05B13/04 |
| A | DE 10 2007 042440 B3 (SIEMENS AG [DE]) 29. Januar 2009 (2009-01-29) * das ganze Dokument * ----- | 1-17 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 5. März 2019 | Patsiopoulos, N |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 4723

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2019

| Im Recherchenbericht angeführtes Patentdokument | Datum der Veröffentlichung | Mitglied(er) der Patentfamilie | Datum der Veröffentlichung |
|---|---|---|---|
| DE 102016224207 A1 | 07-06-2018 | DE 102016224207 A1<br>WO 2018104280 A1 | 07-06-2018<br>14-06-2018 |
| DE 102007042440 B3 | 29-01-2009 | DE 102007042440 B3<br>EP 2185980 A1<br>ES 2426357 T3<br>JP 5243543 B2<br>JP 2010538381 A<br>US 2010205974 A1<br>WO 2009033944 A1 | 29-01-2009<br>19-05-2010<br>22-10-2013<br>24-07-2013<br>09-12-2010<br>19-08-2010<br>19-03-2009 |

EPO FORM P0461

Für nähere Einzelheiten zu diesem Anhang : siehe Amtsblatt des Europäischen Patentamts, Nr.12/82

EP 3 623 881 A1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2112569 B1

**In der Beschreibung aufgeführte Nicht-Patentliteratur**

- **BLUNDELL ; CHARLES ; CORNEBISE ; JULIEN ; KAVUKCUOGLU ; KORAY ; WIERSTRA ; DAAN.** Weight Uncertainty in Neural Networks. *Proceedings of the 32nd International Conference on Machine Learning; ICML,* Mai 2015

- **CHARLES BLUNDELL et al.** Weight Uncertainty in Neural Networks. *Google DeepMind entnommen werden,* 21. Mai 2015